# FASCICULE DE BREVET EUROPEEN

(11) **EP 3 009 805 B1**
(45) Date de publication et mention de la délivrance du brevet: **14.03.2018**
(21) Numéro de dépôt: 15185368.6
(22) Date de dépôt: 15.09.2015
(51) Int. Cl.: G01D 5/20, G01F 15/06, G01D 18/00

(54) **PROCÉDÉ D'AUTO-CALIBRATION D'UN DISPOSITIF DE COMPTAGE DE TOURS D'UNE ROUE PAR AJUSTEMENT D'UNE TENSION DE RÉFÉRENCE**
SELBSTKALIBRIERUNGSVERFAHREN EINER VORRICHTUNG ZUR DREHZAHLMESSUNG EINES RADS DURCH ANGLEICHUNG DER REFERENZSPANNUNG
METHOD FOR AUTO-CALIBRATION OF A DEVICE FOR COUNTING ROTATIONS OF A WHEEL BY ADJUSTING A REFERENCE VOLTAGE

(30) Priorité: 13.10.2014 FR 1459819
(43) Date de publication de la demande: 20.04.2016
(73) Titulaire: SAGEMCOM ENERGY & TELECOM SAS, 92500 Rueil-Malmaison (FR)
(72) Inventeur: TEBOULLE, Henri, 92500 Rueil-Malmaison (FR)
(74) Mandataire: Lavialle, Bruno François Stéphane

(56) Documents cités:
- EP-A1- 0 467 753
- EP-A1- 1 550 844
- DE-A1- 19 903 750

## Description

La présente invention concerne le comptage de tours d'un élément tournant, par exemple dans le domaine des compteurs mécaniques tels que ceux utilisés pour la distribution de gaz, d'eau ou d'électricité.

### ARRIERE PLAN DE L'INVENTION

Il est connu un compteur de gaz comprenant un élément tournant autour d'un axe par rapport à un bâti de telle manière que la vitesse de rotation de l'élément tournant soit représentative de la quantité de gaz distribué. Le compteur comporte un dispositif de comptage du nombre de tours de l'élément tournant, comprenant un aimant excentré fixé à l'élément tournant et un relais magnétique, de type ampoule REED, sous tension monté fixe par rapport au bâti et relié à un circuit de comptage pour détecter le passage de l'aimant et ainsi compter le nombre de tours. Il est connu également un dispositif de comptage dans lequel l'aimant est remplacé par une pièce métallique et le relais magnétique par une bobine d'un circuit résonant.

EP1550844 décrit un compteur d'eau du même type. La conception d'un tel dispositif de comptage doit être conforme à des exigences très strictes en matière de précision de comptage. La dérive acceptable spécifiée pour certains compteurs modernes est ainsi typiquement inférieure ou égale à un tour tous les dix mille tours. Or, l'élément tournant du compteur est soumis à de multiples contraintes qui tendent à perturber le comptage : dérives mécaniques dues par exemple à des vibrations, phénomènes d'usure provoquant un voilage de l'élément tournant, vieillissement des composants, variations de température, etc.

Cette précision de comptage est particulièrement difficile à atteindre lorsque l'hystérésis entre le signal détecté en présence ou en absence de l'aimant ou de la pièce métallique est faible.

### OBJET DE L'INVENTION

L'invention a pour objet d'améliorer la précision d'un tel dispositif de comptage.

### RESUME DE L'INVENTION

En vue de la réalisation de ce but, on propose un procédé d'auto-calibration d'un dispositif de comptage de tours d'une roue pourvue localement d'une cible excentrée, le dispositif de comptage comportant une unité de comptage et un dispositif de détection de la cible comprenant un circuit inductif résonant muni d'une bobine montée fixe en regard d'une portion de trajectoire de la cible pour être sensible à ladite cible, le dispositif de détection étant relié à l'unité de comptage qui est agencée pour : émettre périodiquement dans le circuit inductif une impulsion de tension selon une fréquence d'émission supérieure à une fréquence maximale prédéterminée de rotation de la roue, acquérir un signal oscillant de tension en sortie du circuit inductif et le comparer à une tension de référence, et détecter la présence ou l'absence de la cible en fonction d'un nombre d'oscillations du signal oscillant supérieures à la tension de référence, le procédé d'auto-calibration comprenant une étape de mesure d'une amplitude d'un pic d'oscillation du signal oscillant et une étape de calibration de tension consistant à ajuster la tension de référence en fonction de l'amplitude du pic d'oscillation.

L'étape de mesure et l'étape de calibration de tension permettent d'assurer que la présence et l'absence de la cible correspondent bien chacune à un nombre constant d'oscillations du signal oscillant, et ce, pendant toute la durée de vie du dispositif de comptage. Ainsi, la précision du comptage n'est pas dégradée par les diverses dérives subies par la roue et par le dispositif de détection au cours du temps.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :

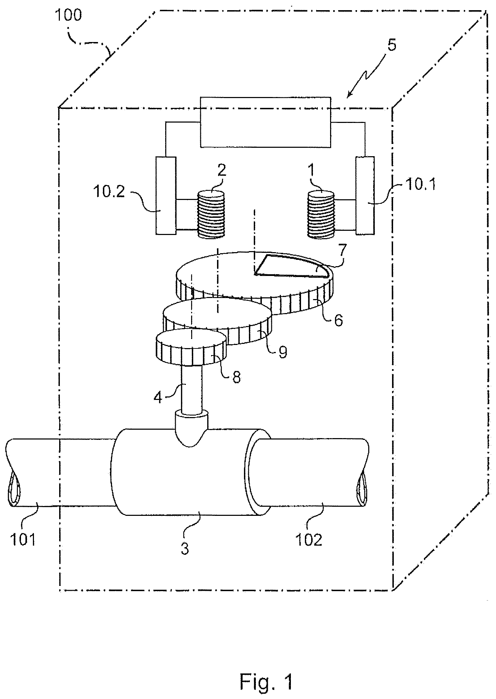

- la figure 1 est une vue schématique en perspective d'un compteur comprenant un dispositif de comptage dans lequel est mis en oeuvre le procédé d'auto-calibration de l'invention ;
- la figure 2 est une vue schématique du dispositif de comptage pour une position de l'élément tournant, avec l'allure du signal oscillant produit par chaque circuit inductif ;
- les figures 3 à 5 sont des vues analogues à la figure 2 montrant le dispositif de comptage, pour d'autres positions de l'élément tournant ;
- la figure 6 est un schéma du circuit du dispositif de comptage ;
- la figure 7 est un graphique illustrant le fonctionnement du dispositif de comptage ;
- les figures 8a, 8b, 8c montrent l'allure du signal oscillant en l'absence de la cible, en présence de celle-ci, et en présence d'une fraude ;
- la figure 9 est un graphique illustrant le fonctionnement du procédé d'auto-calibration de l'invention ;
- la figure 10 représente l'évolution de l'amplitude de pics d'oscillation de bobines d'un premier dispositif de détection et d'un deuxième dispositif de détection du dispositif de comptage ;
- la figure 11 est un graphique illustrant une étape de calibration temporelle du procédé d'auto-calibration de l'invention.

### DESCRIPTION DETAILLEE DE L'INVENTION

L'invention est ici décrite en application à un compteur de gaz destiné à être installé dans un bâtiment privé pour raccorder une installation de distribution du gaz dans le bâtiment à un réseau externe de distribution du gaz. Il va de soi que l'invention n'est pas limitée à cette application et concerne aussi, notamment, les compteurs d'eau, d'électricité...

En référence aux figures, le compteur comprend un bâti formant boîtier 100 dans lequel arrive un conduit 101 d'amenée de gaz, relié au réseau externe de distribution, et dont part un conduit 102 de l'installation de distribution de gaz. Les deux conduits sont reliés l'un à l'autre par un raccord 3 dans lequel s'étend une partie d'un élément tournant 4 entrainée en rotation par le gaz circulant dans le raccord depuis le conduit 101 vers le conduit 102 de telle manière que la rotation de l'élément tournant 4 soit représentative de la quantité de gaz passant dans le raccord 3. Cet agencement est connu en lui-même et ne sera pas plus décrit ici.

Le compteur comprend un dispositif de comptage des tours de l'élément tournant 4, généralement désigné en 5. Le dispositif de comptage 5 comprend une roue 6 en matériau non métallique liée en rotation à l'élément tournant 4 et pourvue localement d'au moins une cible excentrée, ici une masse métallique 7. La masse métallique 7 occupe ici un quartier de la roue 6. La roue 6 est pourvue d'une denture périphérique et un premier pignon denté 8 est solidaire de l'élément tournant 4 pour transmettre le mouvement de l'élément tournant 4 vers la roue 6 via un deuxième pignon denté 9 engrenant avec la roue 6 et le premier pignon 8. Les pignons 8, 9 et la roue 6 ont des diamètres tels que la roue 6 ait une fréquence de rotation inférieure à une fréquence de rotation du premier pignon 8. La roue 6 tourne ici deux fois moins vite que le premier pignon 8.

Le dispositif de comptage 5 comprend également un premier dispositif de détection comprenant un premier circuit inductif résonant 10.1 et un deuxième dispositif de détection comprenant un deuxième circuit inductif résonant 10.2, chaque circuit inductif résonant 10.1, 10.2 étant relié à une unité de comptage comportant ici un microcontrôleur 11.

Chaque circuit inductif 10.1, 10.2 comprend une bobine 1, 2 montée fixe par rapport au boîtier 100 en regard chacune d'une portion de trajectoire de la masse métallique 7. Les bobines 1, 2 sont écartées l'une de l'autre de manière que chaque bobine 1, 2 soit sensible successivement à la masse métallique 7, c'est-à-dire que lorsqu'une des bobines 1, 2 est soumise à l'influence de la masse métallique 7, l'autre des bobines 1, 2 ne l'est pas.

Chaque bobine 1, 2 a une extrémité haute reliée au convertisseur numérique analogique DAC du microcontrôleur 11 par des commutateurs 12.1, 12.2 et une extrémité basse reliée à une borne A1, A2 d'un commutateur 13 ayant une troisième borne reliée à la masse et une quatrième borne B reliée à l'entrée positive d'un comparateur 14. Le comparateur 14 a une entrée négative reliée au convertisseur numérique analogique du microcontrôleur 11 et une sortie reliée à une entrée du microcontrôleur 11, intégrant un mécanisme permettant de compter les fronts montants (on pourrait également compter les fronts descendants au lieu des fronts montants) en sortie du comparateur dont la forme d'onde est un signal impulsionnel rectangulaire par exemple à 3, 3V.

La borne B du commutateur 13 est d'une part directement reliée à un convertisseur analogique numérique CAN du microcontrôleur 11, et d'autre part reliée via une diode 15 à un convertisseur analogique numérique CAN du microcontrôleur 11. Un condensateur 16 est monté entre la cathode de la diode 15 et la masse pour former un détecteur d'enveloppe du signal arrivant par la borne B du commutateur 13.

Le microcontrôleur 11 pilote les transistors 12.1, 12.2 entre leurs états passant et bloquant au moyen de signaux de commande Cmd1, Cmd2.

L'unité de comptage est agencée pour réaliser une opération de comptage en mettant en oeuvre les étapes suivantes :
- émettre périodiquement et quasi simultanément dans chaque circuit inductif 10.1, 10.2 une impulsion de tension Vref1, Vref2 selon une fréquence d'émission supérieure à une fréquence maximale prédéterminée de rotation de la roue 6, et égale à au moins 4 fois ladite fréquence maximale de manière à pouvoir compter les tours de la roue 6 sans erreur à l'aide desdits circuits inductifs,
- détecter un signal oscillant de tension S1, S2 en sortie du circuit inductif 10.1, 10.2 et le comparer à une tension de référence Vcc/2,
- incrémenter d'un un nombre de tours CT mémorisé après que les circuits inductifs 10.1, 10.2 ont livré successivement un signal oscillant ayant un nombre M1, M2 d'oscillations supérieures à la tension de référence inférieur au seuil prédéterminé.

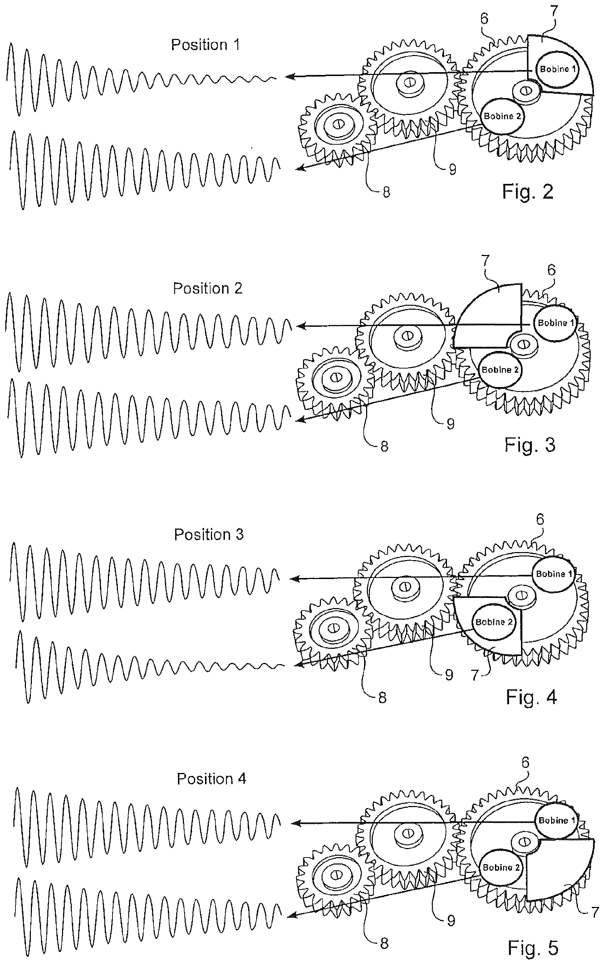

On comprend que le circuit inductif 10.1, 10.2 amortit l'impulsion de tension et fournit un signal oscillant. Selon que la masse métallique 7 est présente ou non sous la bobine, l'amortissement procuré par le circuit inductif 10.1, 10.2 est modifié (voir les figures 2 à 5).

La tension respective des impulsions Vref1 et Vref2 est ajustée au préalable (en usine par exemple), est légèrement supérieure à la tension de référence Vcc/2 et est ici égale respectivement à Vcc/2+|ε1| et Vcc/2+|ε2|. La valeur de cette tension permet de régler le nombre M1, M2 du signal oscillant en présence et en l'absence de la masse métallique 7.

Le fonctionnement du dispositif de comptage va maintenant être décrit plus en détail.

Il est préférable de réaliser une étape de calibration (201) en usine. Pour chaque circuit inductif 10.1, 10.2, la tension Vref1, Vref2 est calibrée de telle manière que :
- lorsque le premier dispositif de détection, respectivement le deuxième dispositif de détection, détecte une présence de la masse métallique 7, le nombre M1, respectivement M2, d'oscillations supérieures à la tension de référence soit égal à 5 ;
- lorsque le premier dispositif de détection, respectivement le deuxième dispositif de détection, détecte une absence de la masse métallique 7, le nombre M1, respectivement M2, d'oscillations supérieures à la tension de référence soit égal à 6.

Au cours de l'étape de calibration (201), on calibre aussi un instant d'échantillonnage tb auquel on mesure une amplitude d'un pic d'oscillation déterminé du signal oscillant (par exemple, le pic d'oscillation déterminé est le troisième pic d'oscillation). L'intérêt de mesurer le pic d'oscillation et de calibrer l'instant d'échantillonnage tb sera expliqué plus tard dans cette description. Comme l'instant d'échantillonnage tb peut être différent pour la bobine 1 et pour la bobine 2, on parlera dans la suite de l'instant d'échantillonnage tb1 pour la bobine 1 et tb2 pour la bobine 2.

On comprend donc que la présence ou l'absence de la masse métallique 7 sont détectées par un signal de détection qui ne présente pas d'hystérésis entre le signal de détection de présence de la masse métallique, correspondant à un nombre M1, respectivement M2 égal à 5 d'oscillations supérieures à la tension de référence, et le signal de détection d'absence de la masse métallique, correspondant à un nombre M1, respectivement M2 égal à 6 d'oscillations supérieures à la tension de référence.

Il est ensuite procédé à une initialisation (étape 202) des variables de fonctionnement du premier dispositif de comptage :
- NT est le nombre de demi-tours de la roue 6 (soit, en théorie, le nombre de tours de l'élément tournant 4) ;
- CT est le nombre de tour de l'élément tournant 4 ;
- R est une variable d'état de l'unité de comptage ;
- A est une variable d'état du procédé d'auto-calibration de l'invention ;
- Aucune_action (quand égal à 1) indique qu'une tentative de fraude été détecté ;
- DI indique quelle est la dernière bobine qui a détecté 5 impulsions (valeur 1 si bobine 1 et valeur 2 si bobine 2) ;
- M1v et M2v indiquent la dernière valeur correcte (5 ou 6) mesurée pour chaque bobine ;
- U1n et U2n représentent le niveau de tension de l'enveloppe ;
- E1 et E2 représentent la valeur moyenne des enveloppes des signaux oscillants S1, S2 (moyenne des N derniers U1n, U2n) ;
- Timer_tb est un compteur qui est activé en fin d'initialisation à la valeur 1 semaine - 143/2ms (1 semaine étant en fait un nombre entier de périodes de 143ms).

Une fois le compteur installé, et en mode de fonctionnement normal, le dispositif de comptage est mis en veille toutes les 143ms pendant presque 143 ms (étape 203) pour économiser l'énergie.

Si Timer_tb atteint un nombre d'instants d'échantillonnage correspondant à une durée d'une semaine, on mesure une tension antérieure V1n-1/2 du signal oscillant de la bobine 1 juste avant l'instant d'échantillonnage tb1, plus précisément à l'instant tb1+εt. On mesure de plus une tension antérieure V2n-1/2 du signal oscillant de la bobine 2 juste avant l'instant d'échantillonnage tb2, plus précisément à l'instant tb2+εt. On remet ensuite le dispositif de comptage en veille jusqu'à la fin des 143ms.

Les transistors 12.1, 12.2 sont alors à l'état bloquant et le commutateur 13 maintient les deux bobines 1, 2 à la masse.

Lorsque l'on sort de l'état de veille à l'instant t=tn, la bobine 1 est excitée par l'injection de l'impulsion de tension. A cette fin, le transistor 12.1 est amené dans son état passant et, après 2µs (la capacité de la bobine 1 est alors chargée), le commutateur 13 est commandé pour relier la bobine 1 à l'entrée positive du comparateur 14 et lui fournir le signal S1. A t=tn+t0, le nombre M1 est déterminé et, à t=tn+t1, le niveau de tension U1n est déterminé. A l'instant t=tn+tb1, on mesure l'amplitude V1n du pic d'oscillation déterminé pour la bobine 1 (étape 204).

Lorsque la bobine 1 est excitée, la bobine 2 est découplée autant que possible du reste du dispositif de comptage. L'extrémité basse de la bobine 2 est mise à la masse à cet effet via le commutateur 13, et l'extrémité haute de la bobine 2 est portée à haute impédance via le commutateur 12.2.

A l'instant t=tn+50ps, la bobine 2 est excitée par l'injection de l'impulsion de tension. A cette fin, le transistor 12.2 est amené dans son état passant et, après 2µs (la capacité de la bobine 2 est alors chargée), le commutateur 13 est commandé pour relier la bobine 2 à l'entrée positive du comparateur 14 et lui fournir le signal S2. A t=tn+50µs+t0, le nombre M2 est déterminé et, à t=tn+50µs+t1, le niveau de tension U2n est déterminé. A l'instant t=tn+50ps+tb2, on mesure l'amplitude V2n du pic d'oscillation déterminé pour la bobine 2 (étape 205). Typiquement, t0=10µs et t1=20µs.

Lorsque la bobine 2 est excitée, la bobine 1 est découplée autant que possible du reste du dispositif de comptage. L'extrémité basse de la bobine 1 est mise à la masse à cet effet via le commutateur 13, et l'extrémité haute de la bobine 1 est portée à haute impédance via le commutateur 12.1.

Les valeurs moyennes des enveloppes E1, E2 sont ensuite calculées (étape 206).

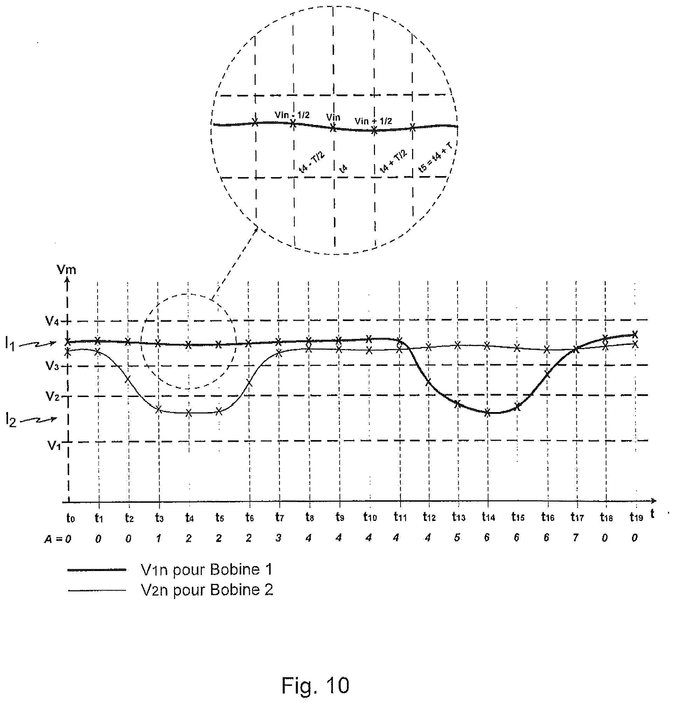

On cherche ensuite à déterminer la véracité d'au moins l'une des conditions suivantes :
- M1<5 ;
- M1>6 ;
- M2<5 ;
- M2>6 ;
- M1=5 et M2=5 ;
- V1n est inférieur à un seuil de tension prédéterminé de présence bas V1, ou seuil de présence bas (V1 est visible sur la figure 10) ;
- V1n est supérieur à un seuil de tension prédéterminé de présence haut V4, ou seuil de présence haut ;
- V2n est inférieur au seuil de présence bas V1 ;
- V2n est supérieur au seuil d'absence haut V4 ;
- E1 est inférieure à un seuil prédéterminé E_Seuil ;
- E2 est inférieure à un seuil prédéterminé E_Seuil.

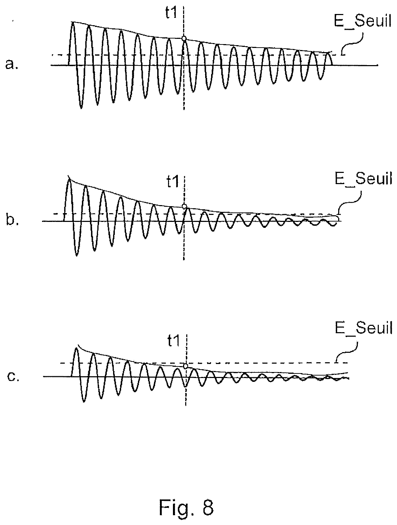

Si l'une de ces conditions est vraie, une alerte à la fraude est émise (étape 208). En particulier, concernant les deux dernières conditions, on peut voir, par comparaison des figure 8a, 8b, 8c, que :
- la valeur moyenne de l'enveloppe du signal en l'absence de la masse métallique 7 et en l'absence d'une masse métallique externe (figure 8a) est supérieure à la valeur moyenne de l'enveloppe du signal en présence de la masse métallique 7 et en l'absence d'une masse métallique externe (figure 8b) ;
- la valeur moyenne de l'enveloppe du signal en présence de la masse métallique 7 et en l'absence d'une masse métallique externe (figure 8b) est supérieure à la valeur moyenne de l'enveloppe du signal en présence d'une masse métallique externe (figure 8c).

Lorsqu'une alerte à la fraude est émise, la valeur 1 est attribuée à la variable Aucune_action (étape 230) .

Si aucune de ces conditions n'est vraie, et également en cas de fraude après avoir attribué la valeur 1 à la variable Aucune_action (étape 230), on attribue à M1v la valeur de M1, et si M2v=0, on attribue à M2v la valeur 6 si M1v=5 ou la valeur 5 sinon (étape 231). De même, on attribue à M2v la valeur de M2, et si M1v=0, on attribue à M1v la valeur 6 si M2v=5 ou la valeur 5 sinon (étape 232).

Puis, une étape de calibration de tension (étape 233) du procédé d'auto-calibration de l'invention est mise en oeuvre.

Suite à cette étape de calibration de tension 233, si Timer_tb a abouti (étape 234), on met en oeuvre une étape de calibration temporelle (étape 235) du procédé d'auto-calibration de l'invention.

La valeur 0 est alors attribuée à la variable Aucune_action (étape 236). Si Timer_tb n'a pas abouti, l'étape 236 est mise en oeuvre directement suite à l'étape 233.

Ensuite, on cherche à déterminer la véracité des conditions suivantes (étape 211) :
- R=0 ou R=2 ;
- M1=5.

Si ces conditions sont vraies, la valeur 1 est attribuée à R et à DI (étape 212) puis la variable NT prend la valeur NT+1 et la variable CT prend la valeur NT lors d'une étape d'incrémentation 213. On reprend ensuite le cycle à la mise en veille du premier dispositif de comptage (203).

Si au moins l'une de ces conditions n'est pas vraie, on cherche à déterminer la véracité des conditions suivantes (étape 214) :
- R=1 ;
- M2=5.

Si ces conditions sont vraies, la valeur 2 est attribuée à R et à DI (étape 215) puis la variable NT prend la valeur NT+1 et la variable CT prend la valeur NT lors de l'étape d'incrémentation 213. On reprend ensuite le cycle à la mise en veille du dispositif de comptage (203).

Si au moins l'une de ces conditions n'est pas vraie, on cherche à déterminer la véracité des conditions suivantes (étape 216) :
- R=0 ou R=4 ;
- M2=5.

Si ces conditions sont vraies, la valeur 3 est attribuée à R et la valeur 2 est attribuée à DI (étape 217) puis la variable NT prend la valeur NT+1 et la variable CT prend la valeur NT lors de l'étape d'incrémentation 213. On reprend ensuite le cycle à la mise en veille du premier dispositif de comptage (203).

Si au moins l'une de ces conditions n'est pas vraie, on cherche à déterminer la véracité des conditions suivantes (étape 218) :
- R=3 ;
- M1=5.

Si ces conditions sont vraies, la valeur 4 est attribuée à R et la valeur 1 est attribuée à DI (étape 219) puis la variable NT prend la valeur NT+1 et la variable CT prend la valeur NT lors de l'étape d'incrémentation 213. On reprend ensuite le cycle à la mise en veille du dispositif de comptage (étape 203).

Si au moins l'une de ces conditions n'est pas vraie, on reprend le cycle à la mise en veille du dispositif de comptage (étape 203).

On décrit maintenant plus en détail le procédé d'auto-calibration de l'invention, qui, comme cela vient d'être dit, comporte l'étape de calibration de tension 233 et l'étape de calibration temporelle 235.

L'étape de calibration de tension 233 consiste à ajuster la tension de référence Vref1 du premier dispositif de détection en fonction de l'amplitude V1n du pic d'oscillation déterminé obtenue pour la bobine 1, et à ajuster la tension de référence Vref2 du deuxième dispositif de détection en fonction de l'amplitude V2n du pic d'oscillation déterminé obtenue pour la bobine 2. L'amplitude V1n du pic d'oscillation déterminé est obtenue pour le premier dispositif de détection au cours de l'étape 204 et l'amplitude V2n du pic d'oscillation déterminé est obtenue pour le deuxième dispositif de détection au cours de l'étape 205.

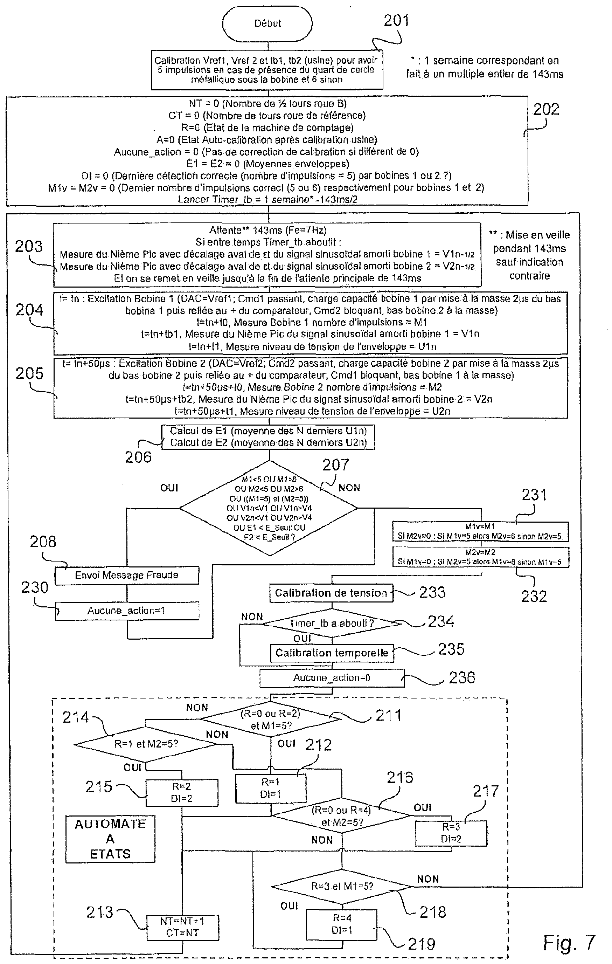

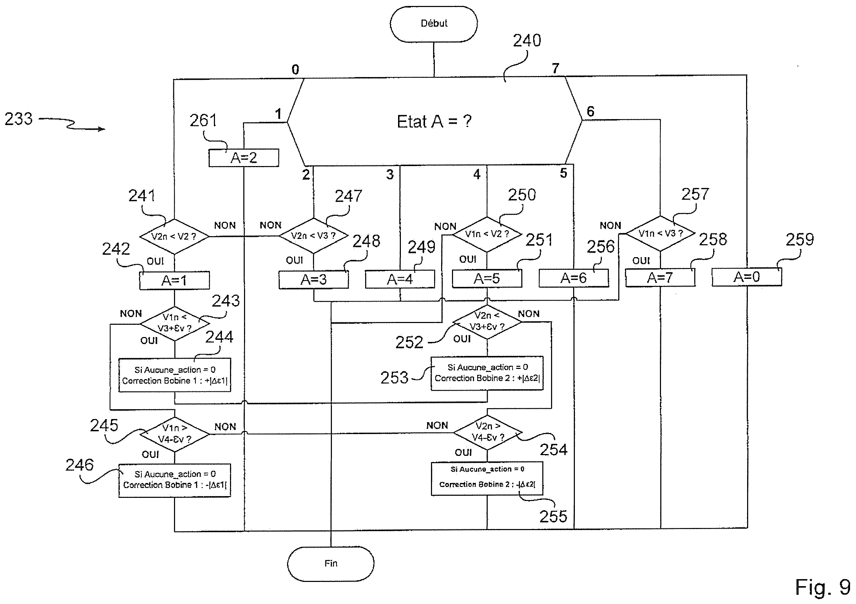

En référence aux figures 9 et 10, l'étape de calibration de tension 233 comporte elle-même une étape préliminaire 240 au cours de laquelle on teste la valeur de la variable d'état A. La variable d'état A peut prendre les valeurs 0, 1, 2, 3, 4, 5, 6 ou 7. Pour rappel, la variable A prend la valeur A=0 lors de son initialisation (étape 202, figure 7).

Lorsque A=0, on cherche à déterminer si V2n<V2 (étape 241), c'est-à-dire si l'amplitude V2n du pic d'oscillation déterminé pour la bobine 2 est inférieure à un seuil de tension prédéterminé de présence haut V2, ou seuil de présence haut V2, ce qui signifie que la bobine 2 du deuxième dispositif de détection détecte la présence de la masse métallique 7.

Si cette condition n'est pas vraie, l'étape de calibration de tension 233 prend fin.

Si cette condition est vraie, la valeur 1 est attribuée à la variable A (étape 242). On cherche alors à déterminer si V1n<V3+εv (étape 243), c'est à dire si l'amplitude V1n du pic d'oscillation est très proche d'un seuil de tension prédéterminé d'absence bas V3, ou seuil d'absence bas V3.

Si c'est le cas, et si la variable Aucune_action est égale à 0, on ajoute une première part de tension |Δε1| à la tension de référence Vref1 (étape 244).

Si ce n'est pas le cas, on cherche à déterminer si V1n>V4-εv, c'est à si l'amplitude V1n du pic d'oscillation déterminé est très proche du seuil d'absence haut V4 (étape 245).

Si V1n>V4-εv et si la variable Aucune_action est égale à 0, on retranche la première part de tension |Δε1| à la tension Vref1 (étape 246).

Sinon, l'étape de calibration de tension 233 prend fin.

Ainsi, on se place tout d'abord dans une situation dans laquelle l'amplitude V1n du pic d'oscillation déterminé est relativement stable puisque, comme la bobine 2 du deuxième dispositif de détection détecte la présence de la masse métallique 7 (étape 241), la bobine 1 du premier dispositif de détection ne la détecte pas. On vérifie ensuite que l'amplitude V1n du pic d'oscillation déterminé se trouve dans une portion centrale d'un intervalle I1 de tension d'absence dont la limite haute est le seuil d'absence haut V4 et la limite basse est le seuil d'absence bas V3, et on ajuste la tension Vref 1 si ce n'est pas le cas. On assure ainsi que l'amplitude V1n du pic d'oscillation déterminé ne s'approche pas trop près des limites de l'intervalle I1, ce qui pourrait fausser la détection de l'absence ou de la présence de la masse métallique 7 par la bobine 1 du premier dispositif de détection.

Au moment de la réalisation de l'étape préliminaire 240, si A=1, la valeur 2 est attribuée à la variable A (étape 261).

Au moment de la réalisation de l'étape préliminaire 240, si A=2, on cherche à déterminer si V2n<V3 (étape 247), c'est-à-dire si la bobine 2 du deuxième dispositif de détection est dans une position intermédiaire. Dans ce cas, la valeur 3 est attribuée à la variable A (étape 248), et l'étape de calibration de tension prend fin.

On attend donc bien, pour ajuster la tension Vref1, que le deuxième dispositif de détection détecte la présence de la masse métallique 7.

Au moment de la réalisation de l'étape préliminaire 240, si A=3, la valeur 4 est attribuée à la variable A (étape 249), et l'étape de calibration de tension prend fin.

On réalise un ajustement similaire pour Vref2 lorsqu'au moment où l'étape 240 est réalisée, A=4, 5, 6 ou 7.

Lorsque A=4, on cherche à déterminer si V1n<V2 (étape 250), c'est-à-dire si l'amplitude V1n du pic d'oscillation déterminé est inférieure au seuil de présence haut V2, ce qui est représentatif du fait que la bobine 1 du deuxième dispositif de détection détecte la présence de la masse métallique 7

Si cette condition n'est pas vraie, l'étape de calibration de tension 233 prend fin.

Si cette condition est vraie, la valeur 5 est attribuée à la variable A (étape 251). On cherche alors à déterminer si V2n<V3+εv, c'est à si l'amplitude V2n du pic d'oscillation déterminé est très proche du seuil d'absence bas V3.

Si c'est le cas, et si la variable Aucune_action est égale à 0, on ajoute une deuxième part de tension |Δε2| à la tension Vref2 (étape 253).

Si ce n'est pas le cas, on cherche à déterminer si V2n>V4-εv, c'est à si l'amplitude du pic d'oscillation V1n est très proche du seuil d'absence haut (étape 254).

Si V2n>V4-εv, et si la variable Aucune_action est égale à 0, on retranche la deuxième part de tension |Δε2| à la tension Vref2 (étape 255).

Sinon, l'étape de calibration de tension 233 prend fin.

Au moment de la réalisation de l'étape préliminaire 240, si A=5, la valeur 6 est attribuée à la variable A (étape 256), et l'étape de calibration de tension 233 prend fin.

Au moment de la réalisation de l'étape préliminaire 240, si A=6, on cherche à déterminer si V1n<V3 (étape 257), c'est-à-dire si la bobine 1 du deuxième dispositif de détection ne détecte pas la présence de la masse métallique 7. Dans ce cas, la valeur 7 est attribuée à la variable A (étape 258), et l'étape de calibration de tension 233 prend fin.

Au moment de la réalisation de l'étape préliminaire 240, si A=7, la valeur 0 est attribuée à la variable A (étape 259), et l'étape de calibration de tension 233 prend fin.

On attend donc, pour ajuster la tension Vref2, que le premier dispositif de détection détecte la présence de la masse métallique 7.

On note ici que, pour s'affranchir des bruits de mesure, il est possible de réaliser l'étape de calibration de tension 233 en utilisant non pas directement les amplitudes V1n et V2n des pics d'oscillation déterminés, mais la moyenne de ces pics sur un certain nombre d'échantillons consécutifs.

On détermine des niveaux de qualité Q1, Q2 associés à la signature respective de chacune des bobines 1, 2.

Pour la bobine 1, dans les états où A=1, 2, 3, on mémorise une valeur minimale S1min des amplitudes V1n des pics d'oscillations déterminés associés à tous les échantillons et une valeur maximale S1max des amplitudes V1n des pics d'oscillations déterminés associés à tous les échantillons. On détermine ainsi une qualité Q1 de la signature de la bobine 1 :
- Q1=Bonne si S1min et S1max ∈ [V3+εv;V4-εv] ;
- Q1=Moyenne si S1min ∈ [V3;V3+εv[ ou S1max ∈ ]V4-εv;V4] ;
- Q1=Mauvaise si Slmin<V3 ou Slmax>V4.

De même, pour la bobine 2, dans les états où A=5, 6, 7, on mémorise une valeur minimale S2min des amplitudes V2n des pics d'oscillations déterminés associés à tous les échantillons et une valeur maximale S2max des amplitudes V2n des pics d'oscillations déterminés associés à tous les échantillons. On détermine ainsi une qualité Q2 de la signature de la bobine 2 :
- Q2=Bonne si S2min et S2max ∈ [V3+εv;V4-εv] ;
- Q1=Moyenne si S2min ∈ [V3;V3+εv[ ou S2max ∈ ]V4-εv;V4] ;
- Q1=Mauvaise si S2min<V3 ou S2max>V4.

Une qualité globale pour les deux bobines 1,2 Bonne, Moyenne ou Mauvaise est obtenue par utilisation d'une fonction logique « ET » en prévoyant que le « moins disant » l'emporte.

L'étape de calibration temporelle 235, quant à elle, consiste à ajuster les instants d'échantillonnage tb1, tb2 auxquels les mesures des amplitudes V1n, V2n des pics d'oscillation déterminés sont réalisées (étape 204 et 205). Cette étape de calibration temporelle permet notamment d'améliorer la précision de l'étape de calibration de tension en assurant que la valeur prise en compte pour chaque amplitude de pic d'oscillation déterminé correspond bien à la valeur réelle de ladite amplitude.

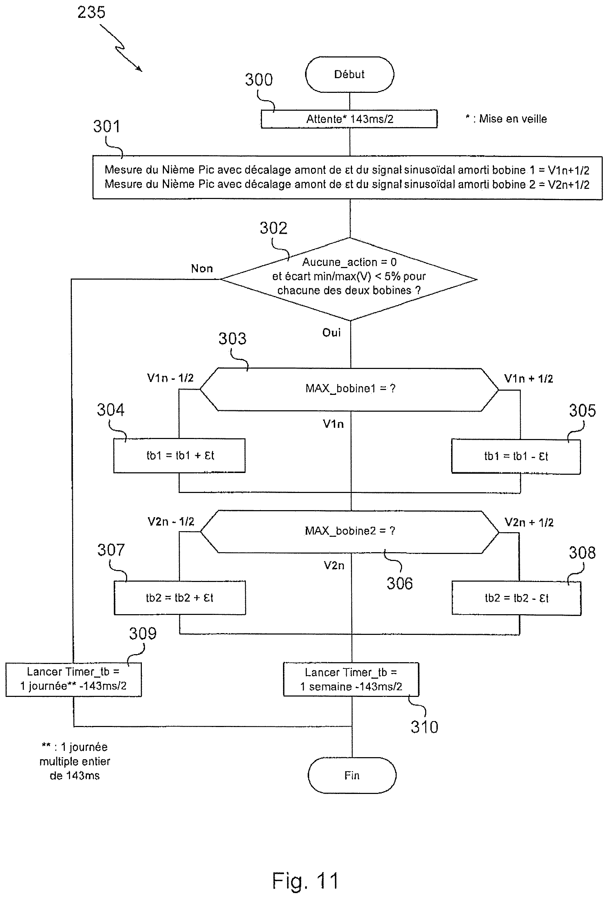

En référence aux figures 10 et 11, l'étape de calibration temporelle 235 comprend tout d'abord une mise en veille de 143/2ms (étape 300).

Puis, au cours d'une étape 301, on mesure une tension postérieure V1n+1/2 du signal oscillant de la bobine 1 juste après l'instant d'échantillonnage tb, plus précisément à l'instant tb1+εt, et une tension postérieure V2n+1/2 du signal oscillant de la bobine 2 juste après l'instant d'échantillonnage tb2, plus précisément à l'instant tb2+εt.

On compare ensuite les tensions V1n, V1n-1/2 (acquise à l'étape 203) et V1n+1/2 d'une part, et les tensions V2n, V2n-1/2 (acquise à l'étape 203) et V2n+1/2 d'autre part. On définit une valeur min1 (respectivement min2) et max1 (respectivement max2) égales à la valeur minimale et à la valeur maximale de V1n, V1n-1/2 et V1n+1/2 (respectivement V2n, V2n-1/2 et V2n+1/2).

Au cours de l'étape 302, on vérifie si les conditions cumulées suivantes sont vraies :
- Aucune_action=0 ;
- l'écart entre min1 et max1 est inférieur à 5% et l'écart entre min2 et max2 est inférieur à 5%.

Si ce n'est pas le cas, cela signifie qu'au moment de cette étape 302, la courbe correspondant à la bobine 1 et/ou à la bobine 2 n'est pas stable, et qu'il est préférable de ne pas tenter de réaliser une calibration temporelle de tb1 ou de tb2. On relance donc Timer_tb pour qu'il compte un nombre d'instants d'échantillonnage correspondant à une journée - 143/2ms (1 journée étant en fait un nombre entier de périodes de 143ms). (étape 309), et donc on prévoit de réaliser « rapidement » une nouvelle tentative de calibration temporelle. L'étape de calibration temporelle 235 s'achève alors.

Si les conditions de l'étape 302 sont vraies, alors on détermine au cours de l'étape 303 si max1 est égal à V1n, V1n+1/2 ou V1n-1/2. Si max1=V1n, on ne modifie pas l'instant d'échantillonnage tb1 pour la bobine 1 qui correspond bien à une mesure de l'amplitude au niveau du pic d'oscillation déterminé pour la bobine 1. Si max1=V1n-1/2, alors on retarde l'instant d'échantillonnage en ajoutant εt à l'instant d'échantillonnage tb1 pour que la mesure de V1n corresponde bien à l'amplitude du pic d'oscillation (étape 304). Au contraire, si max1=V1n+1/2, alors on avance l'instant d'échantillonnage en retranchant εt à l'instant d'échantillonnage tb1 pour que la mesure de V1n corresponde bien à l'amplitude du pic d'oscillation (étape 305).

De même, on détermine au cours de l'étape 306 si max2 est égal à V2n, V2n+1/2 ou V2n-1/2. Si max2=V2n, on ne modifie pas l'instant d'échantillonnage tb2 pour la bobine 2 qui correspond bien à une mesure de l'amplitude au niveau du pic d'oscillation déterminé pour la bobine 2. Si max2=V2n-1/2, alors on retarde l'instant d'échantillonnage en ajoutant εt à l'instant d'échantillonnage tb2 pour que la mesure de V2n corresponde bien à l'amplitude du pic d'oscillation (étape 307). Au contraire, si max2=V1n+1/2, alors on avance l'instant d'échantillonnage en retranchant εt à l'instant d'échantillonnage tb2 pour que la mesure de V2n corresponde bien à l'amplitude du pic d'oscillation (étape 308).

Cette étape de calibration temporelle peut facilement être réalisée par un microcontrôleur relativement lent pour restituer les mesures de chaque échantillonnage, car les instants d'échantillonnage sont eux, très précis, et les échantillons V1n-1/2, V1n, V1n+1/2, V2n-1/2, V2n et V2n+1/2 sont espacés dans le temps.

On note ici que, pour s'affranchir des bruits de mesure, il serait possible de réaliser l'étape de calibration temporelle en utilisant des moyennes sur plusieurs échantillons des valeurs V1n, V1n-1/2, V1n+1/2 et V2n, V2n-1/2, V2n+1/2. On pourrait aussi déterminer à partir de ces valeurs et de la valeur estimée de l'amplitude du pic d'oscillation l'instant d'échantillonnage du pic par interpolation quadratique ou linéaire, sachant que ce pic correspond au sommet d'une quasi-sinusoïde.

Bien entendu, l'invention n'est pas limitée aux modes de réalisation décrits mais englobe toute variante entrant dans le champ de l'invention telle que définie par les revendications.

En particulier, l'invention est applicable à tout compteur mécanique.

Le dispositif de comptage peut ne comporter qu'une bobine. Il peut également comporter plus de deux bobines.

Le dispositif de comptage peut être dépourvu de dispositif de détection de fraude.

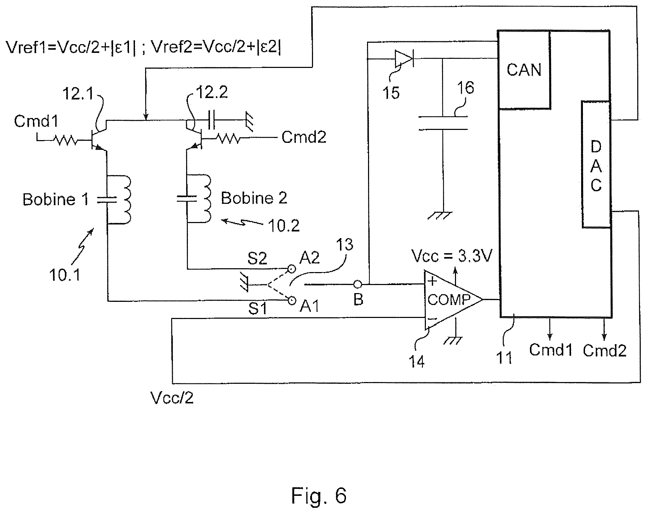

Le dispositif décrit Fig. 6 pourrait comporter une tension de référence fixe de Vcc/2 en haut des bobines, et une tension d'auto-calibration de la bobine 1 Vref1=Vcc/2-|ε1|, et une tension d'auto-calibration de la bobine 2 Vref2=Vcc/2-|ε2|, injectées sur l'entrée - du comparateur 14, sans changer le principe de l'invention, mis à part le fait que tous les signes des corrections |Δs1| et |Δε2| sont inversés.

## Revendications

1. Procédé d'auto-calibration d'un dispositif de comptage (5) de tours d'une roue (6) pourvue localement d'une cible excentrée (7), le dispositif de comptage comportant une unité de comptage, un premier dispositif de détection et un deuxième dispositif de détection comprenant chacun un circuit inductif résonant (10.1, 10.2) muni d'une bobine montée fixe en regard d'une portion de trajectoire de la cible (7), les bobines étant écartées l'une de l'autre de manière à ce que chaque bobine soit sensible successivement à ladite cible, chaque dispositif de détection étant relié à l'unité de comptage qui est agencée pour : émettre périodiquement dans le circuit inductif dudit dispositif de détection une impulsion de tension selon une fréquence d'émission supérieure à une fréquence maximale prédéterminée de rotation de la roue (6), acquérir un signal oscillant de tension en sortie du circuit inductif et le comparer à une tension de référence (Vref1, Vref2), et détecter la présence ou l'absence de la cible (7) en fonction d'un nombre d'oscillations du signal oscillant supérieures à la tension de référence, le procédé d'auto-calibration comprenant une étape de mesure d'une amplitude d'un pic d'oscillation du signal oscillant et une étape de calibration de tension (233) consistant à ajuster la tension de référence en fonction de l'amplitude (V1n, V2n) du pic d'oscillation, l'unité de comptage étant agencée pour réaliser une opération de comptage d'un tour en émettant l'impulsion de tension quasi simultanément dans chaque circuit résonant et pour incrémenter d'un le nombre de tours mémorisé après que le premier dispositif de détection et le deuxième dispositif de détection ont successivement détecté la présence de la cible, l'étape de mesure et l'étape de calibration de tension étant réalisées pour l'un des dispositifs de détection alors que l'autre des dispositifs de détection détecte la présence de la cible (7), le procédé d'auto-calibration comprenant en outre une étape de calibration temporelle (235) consistant à ajuster l'instant d'échantillonnage (tb1, tb2) auquel l'étape de mesure est effectuée, l'étape de calibration temporelle (235) consistant à mesurer une tension antérieure du signal oscillant juste avant l'instant d'échantillonnage, à mesurer une tension postérieure du signal oscillant juste après l'instant d'échantillonnage, à avancer l'instant d'échantillonnage si la tension antérieure est supérieure à la tension mesurée à l'instant d'échantillonnage et à retarder l'instant d'échantillonnage si la tension postérieure est supérieure à la tension mesurée à l'instant d'échantillonnage.

2. Procédé d'auto-calibration selon la revendication 1, dans lequel l'étape de calibration de tension consiste à ajouter une première part de tension (|Δε1|, |Δε2|) à la tension de référence (Vref1, Vref2) lorsque l'amplitude du pic d'oscillation est inférieure à un seuil prédéterminé et à retrancher une deuxième part de tension (|Δε1|, |Δε2|) à la tension de référence (Vref1, Vref2) lorsque l'amplitude du pic d'oscillation est supérieure à un seuil prédéterminé.

3. Dispositif de comptage (5) de tours d'une roue (6) pourvue localement d'une cible excentrée (7), le dispositif de comptage comportant une unité de comptage, un premier dispositif de détection et un deuxième dispositif de détection comprenant chacun un circuit inductif résonant (10.1, 10.2) muni d'une bobine montée fixe en regard d'une portion de trajectoire de la cible (7), les bobines étant écartées l'une de l'autre de manière à ce que chaque bobine soit sensible successivement à ladite cible, chaque dispositif de détection étant relié à l'unité de comptage qui est agencée pour : émettre périodiquement dans le circuit inductif dudit dispositif de détection une impulsion de tension selon une fréquence d'émission supérieure à une fréquence maximale prédéterminée de rotation de la roue (6), acquérir un signal oscillant de tension en sortie du circuit inductif et le comparer à une tension de référence (Vref1, Vref2), et détecter la présence ou l'absence de la cible (7) en fonction d'un nombre d'oscillations du signal oscillant supérieures à la tension de référence, et l'unité de comptage étant agencée pour réaliser une opération de comptage d'un tour en émettant l'impulsion de tension quasi simultanément dans chaque circuit résonant et pour incrémenter d'un le nombre de tours mémorisé après que le premier dispositif de détection et le deuxième dispositif de détection ont successivement détecté la présence de la cible, le dispositif de comptage (5) étant agencé pour mettre en oeuvre le procédé d'auto-calibration selon la revendication 1.

4. Compteur comprenant un dispositif de comptage selon la revendication 3.

## Patentansprüche

1. Verfahren zur Selbstkalibrierung einer Vorrichtung (5) zum Zählen von Umdrehungen eines Rades (6), das lokal mit einem außermittigen Ziel (7) versehen ist, wobei die Zählvorrichtung eine Zähleinheit, eine erste Detektionsvorrichtung und eine zweite Detektionsvorrichtung umfasst, die jeweils einen induktiven Resonanzkreis (10.1, 10.2) umfassen, der mit einer Spule versehen ist, die gegenüber einem Bahnkurvenabschnitt des Ziels (7) ortsfest gelagert ist, wobei die Spulen derart zueinander beabstandet sind, dass jede Spule nacheinander auf das genannte Ziel sensitiv ist, wobei jede Detektionsvorrichtung mit der Zähleinheit verbunden ist, die so ausgebildet ist, dass sie: periodisch in den induktiven Kreis der Detektionsvorrichtung einen Spanungsimpuls gemäß einer Sendefrequenz aussendet, die größer als eine vorgegebene maximale Frequenz der Drehung des Rades (6) ist, ein Spannungsschwingungssignal am Ausgang des induktiven Kreises erfasst und es mit einer Referenzspannung (Vref1, Vref2) vergleicht, und das Vorhandensein oder das Nichtvorhandensein des Ziels (7) in Abhängigkeit einer Anzahl von Schwingungen des Schwingungssignals erfasst, die größer als die Referenzspannung sind, wobei das Selbstkalibrierungsverfahren einen Schritt des Messens einer Amplitude eines Schwingungspeaks des Schwingungssignals und einen Schritt (233) der Kalibrierung der Spannung umfasst, der im Anpassen der Referenzspannung in Abhängigkeit von der Amplitude (V1n, V2n) des Schwingungspeaks besteht, wobei die Zähleinheit so ausgebildet ist, dass sie einen Zählvorgang zum Zählen einer Umdrehung durchführt, indem sie den Spannungsimpuls quasi gleichzeitig in jeden Resonanzkreis aussendet, und sie die gespeicherte Zahl der Umdrehungen um eins erhöht, nachdem die erste Detektionsvorrichtung und die zweite Detektionsvorrichtung nacheinander das Vorhandensein des Ziels erfasst haben, wobei der Schritt des Messens und der Schritt der Spannungskalibrierung für eine der Detektionsvorrichtungen durchgeführt wird, während die andere der Detektionsvorrichtungen das Vorhandensein des Ziels (7) erfasst, wobei das Selbstkalibrierungsverfahren ferner einen Zeitkalibrierungsschritt (235) umfasst, der im Anpassen des Abtastzeitpunktes (tb1, tb2) besteht, zu dem der Messschritt durchgeführt wird, wobei der Zeitkalibrierungsschritt (235) darin besteht, dass eine frühere Spannung des Schwingungssignals kurz vor dem Abtastzeitpunkt gemessen wird, eine spätere Spannung des Schwingungssignals kurz nach dem Abtastzeitpunkt gemessen wird, der Abtastzeitpunkt vorverlegt wird, wenn die frühere Spannung größer als die zum Abtastzeitpunkt gemessene Spannung ist, und der Abtastzeitpunkt verzögert wird, wenn die spätere Spannung größer als die zum Abtastzeitpunkt gemessene Spannung ist.

2. Verfahren zur Selbstkalibrierung nach Anspruch 1, bei dem der Schritt der Spannungskalibrierung darin besteht, dass ein erster Spannungsanteil (|Δε1|, |Δε2|) zur Referenzspannung (Vref1, Vref2) hinzugefügt wird, wenn die Amplitude des Schwingungspeaks kleiner als ein vorgegebener Schwellwert ist, und ein zweiter Spannungsanteil (|Δε1|), |Δε2|) von der Referenzspannung (Vref1, Vref2) abgezogen wird, wenn die Amplitude des Schwingungspeaks größer als ein vorgegebener Schwellwert ist.

3. Zählvorrichtung (5) zum Zählen der Umdrehungen eines Rades (6), das lokal mit einem außermittigen Ziel (7) versehen ist, wobei die Zählvorrichtung eine Zähleinheit, eine erste Detektionsvorrichtung und eine zweite Detektionsvorrichtung umfasst, die jeweils einen induktiven Resonanzkreis (10.1, 10.2) umfassen, der mit einer Spule versehen ist, die gegenüber einem Bahnkurvenabschnitt des Ziels (7) ortsfest gelagert ist, wobei die Spulen derart zueinander beabstandet sind, dass jede Spule nacheinander auf das Ziel sensitiv ist, wobei jede Detektionsvorrichtung mit der Zähleinheit verbunden ist, die so ausgebildet ist, dass sie: periodisch in den induktiven Kreis der Detektionsvorrichtung einen Spannungsimpuls gemäß einer Sendefrequenz aussendet, die größer als eine vorgegebene maximale Frequenz der Drehung des Rades (6) ist, ein Spannungsschwingungssignal am Ausgang des induktiven Kreises erfasst und es mit einer Referenzspannung (Vref1, Vref2) vergleicht, und das Vorhandensein oder das Nichtvorhandensein des Ziels (7) in Abhängigkeit einer Anzahl von Schwingungen des Schwingungssignals erfasst, die größer als die Referenzspannung sind, und wobei die Zähleinheit so ausgebildet ist, dass sie einen Vorgang zum Zählen einer Umdrehung durchführt, indem sie einen Spannungsimpuls quasi gleichzeitig in jeden Resonanzkreis aussendet, und sie die gespeicherte Zahl der Umdrehungen um eins erhöht, nachdem die erste Detektionsvorrichtung und die zweite Detektionsvorrichtung nacheinander das Vorhandensein des Ziels erfasst haben, wobei die Zählvorrichtung (5) so ausgebildet ist, dass sie das Selbstkalibrierungsverfahren nach Anspruch 1 durchführt.

4. Zähler, umfassend eine Zählvorrichtung nach Anspruch 3.

## Claims

1. A self-calibration method for calibrating a counter device (5) for counting revolutions of a wheel (6) that is locally provided with an eccentric target (7), the counter device including a counter unit, and first and second detector devices, each comprising a resonant inductive circuit (10.1, 10.2) provided with a coil mounted stationary facing a portion of the path of the target (7), the coils being spaced apart from each other in such a manner that each coil is sensitive in succession to said target, each detector device being connected to the counter unit, which is arranged to: emit a voltage pulse into the inductive circuit of said detector device periodically at an emission frequency greater than a predetermined maximum frequency of rotation of the wheel (6); acquire an alternating voltage signal at the output of the inductive circuit and compare it with a reference voltage (Vref1, Vref2); and detect the presence or the absence of the target (7) as a function of the number of oscillations of the alternating signal that are greater than the reference voltage; the self-calibration method comprising a measurement step for measuring the amplitude of an alternation peak of the alternating signal and a voltage calibration (233) step consisting in adjusting the reference voltage as a function of the amplitude (V1n, V2n) of the alternation peak; the counter unit being arranged to perform an operation of counting a revolution by emitting the voltage pulses almost simultaneously in each resonant circuit and to increment the stored number of revolutions by one after the first detector device and the second detector device have both detected the presence of the target in succession, the measurement step and the voltage calibration step being performed for one of the detection devices while the other detector device is detecting the presence of the target (7); the self-calibration method further comprising a time calibration step (235) consisting in adjusting the sampling instant (tb1, tb2) at which the measurement step is performed, the time calibration step (235) consisting in measuring a voltage prior to the alternating signal immediately before the sampling instant, in measuring a voltage posterior to the alternating signal immediately after the sampling instant, in advancing the sampling instant if the anterior voltage is greater than the voltage measured at the sampling instant and in retarding the sampling instant if the posterior voltage is greater than the voltage measured at the sampling instant.

2. A self-calibration method according to claim 1, wherein the voltage calibration step consists in adding a first voltage offset (|Δε1|, |Δε2|) to the reference voltage (Vref1, Vref2) when the amplitude of the alternation peak is less than a predetermined threshold, and in subtracting a second voltage offset (|Δε1|, |Δε2|) from the reference voltage (Vref1, Vref2) when the amplitude of the alternation peak is greater than a predetermined threshold.

3. A counter device (5) for counting revolutions of a wheel (6) that is locally provided with an eccentric target (7), the counter device including a counter unit, and first and second detector devices, each comprising a resonant inductive circuit (10.1, 10.2) provided with a coil mounted stationary facing a portion of the path of the target (7), the coils being spaced apart from each other in such a manner that each coil is sensitive in succession to said target, each detector device being connected to the counter unit, which is arranged to: emit a voltage pulse into the inductive circuit of said detector device periodically at an emission frequency greater than a predetermined maximum frequency of rotation of the wheel (6); acquire an alternating voltage signal at the output of the inductive circuit and compare it with a reference voltage (Vref1, Vref2); and detect the presence or the absence of the target (7) as a function of a number of oscillations of the alternating signal that are greater than the reference voltage; and the counter unit being arranged to perform an operation of counting a revolution by emitting voltage pulses almost simultaneously into each resonant circuit and to increment the stored number of revolutions by one after the first detector device and the second detector device have both detected the presence of the target in succession, the counter device (5) being arranged to perform the self-calibration method according to claim 1.

4. A meter including a counter device according to claim 3.
